# EUROPÄISCHE PATENTSCHRIFT

(11) **EP 3 473 918 B1**
(45) Veröffentlichungstag und Bekanntmachung des Hinweises auf die Patenterteilung: **01.12.2021**
(21) Anmeldenummer: 17197220.1
(22) Anmeldetag: 19.10.2017
(51) Int. Cl.: G02B 19/00, F21S 41/27, F21S 41/32, F21S 41/365

(54) **BELEUCHTUNGSVORRICHTUNG FÜR EINEN KRAFTFAHRZEUGSCHEINWERFER**
LIGHTING DEVICE FOR A MOTOR VEHICLE HEADLIGHT
DISPOSITIF D'ÉCLAIRAGE POUR UN PHARE DE VÉHICULE AUTOMOBILE

(43) Veröffentlichungstag der Anmeldung: 24.04.2019
(73) Patentinhaber: ZKW Group GmbH, 3250 Wieselburg (AT)
(72) Erfinder: Hechenberger, Josef, 5310 Mondsee (AT); Mandl, Bernhard, 3200 Ober-Grafendorf (AT); Zorn, Jürgen, 3602 Rossatz (AT); Riepl, Kevin, 4020 Linz (AT)
(74) Vertreter: Patentanwaltskanzlei Matschnig & Forsthuber OG

(56) Entgegenhaltungen:
- WO-A1-2013/134805
- WO-A1-2016/005409
- WO-A1-2017/064753
- WO-A2-2006/060392
- WO-A2-2012/040280
- CN-A- 105 716 023
- DE-A1-102011 009 100
- US-A1- 2005 201 114
- US-A1- 2007 037 906

## Beschreibung

Die Erfindung betrifft eine Beleuchtungsvorrichtung für einen Kraftfahrzeugscheinwerfer, umfassend
- ein in Hauptabstrahlrichtung eines ersten Leuchtmittels angeordnetes, lichtleitendes Primäroptikelement, das auf einer dem ersten Leuchtmittel zugewandten Seite eine Lichteinkoppelfläche zur Einkopplung von Lichtstrahlen in das Primäroptikelement, auf eine dem ersten Leuchtmittel abgewandten Seite eine Lichtauskoppelfläche sowie eine sich zwischen der Lichteinkoppelfläche und der Lichtauskoppelfläche erstreckende Mantelfläche aufweist, an der das eingekoppelte Licht durch Totalreflexion in Richtung der Lichtauskoppelfläche des Primäroptikelements weiterleitbar ist,
- ein in Lichtabstrahlrichtung nach der Lichtauskoppelfläche des Primäroptikelements angeordnetes Sekundäroptikelement, das auf einer der Lichtauskoppelfläche des Primäroptikelements zugewandten Seite eine Lichteinkoppelfläche und auf einer dem Primäroptikelement abgewandten Seite eine Lichtauskoppelfläche aufweist, und
- einen in Lichtabstrahlrichtung nach der Lichtauskoppelfläche des Sekundäroptikelements angeordneten, zur Erzeugung einer Lichtverteilung oder einer Teil-Lichtverteilung einer Lichtfunktion vorgesehenen Reflektor,
wobei das Sekundäroptikelement eingerichtet ist, die von dem ersten Leuchtmittel emittierten Lichtstrahlen, welche die Lichtauskoppelfläche des Sekundäroptikelements erreichen, beim Auskoppeln mittels Brechung auf den Reflektor zu lenken oder ohne Richtungsänderung passieren zu lassen.

Weiters betrifft die Erfindung noch einen Kraftfahrzeugscheinwerfer mit zumindest einer der oben genannten Beleuchtungsvorrichtung.

Üblicherweise kann ein Kraftfahrzeugscheinwerfer mehrere Lichtfunktionen erzeugen. Hierzu zählen beispielsweise eine Abblendlichtfunktion sowie eine Fernlichtfunktion, wobei diese Lichtfunktionen gesetzliche Vorgaben erfüllen müssen. Solche Lichtfunktionen setzen sich im Allgemeinen aus einer Lichtverteilung oder mehreren Teil-Lichtverteilungen zusammen.

Als Lichtquellen werden unter anderem LEDs verwendet, die aufgrund der jeweiligen Aufbauten bzw. Beleuchtungsvorrichtungen zur Erzeugung der Abblendlichtfunktion und der Fernlichtlichtfunktion auf voneinander getrennten Leiterplatten angeordnet sind.

Um diese bestimmten Lichtfunktionen zu erzeugen kann es erforderlich sein, die emittierten Lichtstrahlen einer oder mehrerer LEDs über einen Umlenkoptikkörper auf einen Reflektor umzulenken.

Dabei muss beachtet werden, dass so wenig Lichtleistung bzw. Lichtstärke wie möglich während des Umlenkprozesses verloren geht.

Es ist eine Aufgabe der Erfindung eine Beleuchtungsvorrichtung derart weiterzubilden, dass auf einfache Art und Weise der Wirkungsgrad zur Erzeugung einer Lichtfunktion verbessert wird.

Diese Aufgabe wird dadurch gelöst, dass in Hauptabstrahlrichtung des ersten Leuchtmittels vor der Lichteinkoppelfläche des Primäroptikelements eine Vorsatzoptik angeordnet ist, die eingerichtet ist, die von dem ersten Leuchtmittel emittierten Lichtstrahlen auf einen Punkt zu fokussieren, wobei
das Sekundäroptikelement als Teil einer Kugel mit einem Kugelmittelpunkt, wobei die reflektierende Mantelfläche des Primäroptikelements einen hyperbolisch geformten Bereich mit einem Brennpunkt und einem virtuellen Brennpunkt aufweist, wobei der hyperbolisch geformte Bereich ein Umlenken der durch die Lichteinkoppelfläche des Primäroptikelements eintretenden Lichtstrahlen in Richtung der Lichtauskoppelfläche des Primäroptikelements ermöglicht, wobei
der Brennpunkt des hyperbolisch geformten Bereichs des Primäroptikelements und der Kugelmittelpunkt in einem Punkt liegen, und wobei
die Vorsatzoptik dazu eingerichtet ist, die Lichtstrahlen des ersten Leuchtmittels auf den virtuellen Brennpunkt des hyperbolisch geformten Bereichs des Primäroptikelements zu fokussieren.

In drei Dimensionen beschreibt eine Quadrik im Regelfall eine Fläche im Raum, die auch Fläche zweiter Ordnung oder quadratische Fläche genannt wird.

Beispiele einer dreidimensionalen Quadrik sind ein (zweischaliger) Hyperboloid, Ellipsoid, (hyperbolischer) Paraboloid, Zylinder, elliptischer Paraboloid und ein Kegel.

In der Regel weisen Quadriken dreidimensionale, gekrümmte Flächen auf, wobei ausgeartete Quadriken in manchen Richtungen geradlinige Strukturen aufweisen, wie beispielsweise ein Zylinder in Richtung seiner Höhe oder ein Kegel, ausgehend von einem Punkt der Basisfläche entlang der Mantelfläche in Richtung der Spitze des Kegels.

Es kann auch günstig sein, wenn das Sekundäroptikelement als Kegel ausgebildet ist.

Es kann auch vorgesehen sein, wenn das Sekundäroptikelement als Teil eines Ellipsoiden ausgebildet ist.

Abseits der Kugelform und der Kegelform sind im Allgemeinen auch andere dreidimensionale Quadriken bzw. Teilflächen solcher Quadriken als Lichtauskoppelfläche des Sekundäroptikelements denkbar, wie etwa Ausschnitte eines Ellipsoids.

Die Kugelfläche, die Kegelfläche sowie die Teilfläche eines Ellipsoiden weisen im Regelfall jedoch die gewünschten Vorteile auf.

Ziel ist es, die Lichtstrahlen einer Lichtquelle möglichst gerichtet bzw. gebündelt auf einen zur Erzeugung einer Lichtverteilung oder einem Teil einer Lichtverteilung vorgesehenen Reflektor bzw. auf den effektiven Nutzbereich eines Reflektors zu lenken, ohne einer Abnahme des Lichtstroms.

Die Lichtstrahlen der Lichtquelle bzw. der Lichtquellen treten über die Lichteinkoppelfläche in das Primäroptikelement ein und werden von der Mantelfläche des Primäroptikelements mittels Totalreflexion auf die Lichtauskoppelfläche desselben bzw. zur Lichteinkoppelfläche eines Sekundäroptikelements weitergeleitet bzw. umgelenkt.

Der Lichtauskoppelfläche des Sekundäroptikelements ist ein Reflektor nachgeschalten, der das von dem ersten Leuchtmittel umgelenkte Licht in eine gewünschte Austrittsrichtung reflektiert.

Die Lichtauskoppelfläche des Sekundäroptikelements ist hierbei derart ausgebildet, dass möglichst alle Lichtstrahlen unter Ausnützung des Brechungsgesetzes auf die Nutzfläche des Reflektors gelenkt werden.

So werden Lichtstrahlen, die den Kugelmittelpunkt des Sekundäroptikelements schneiden, beim Übertritt durch die Lichtauskoppelfläche des Sekundäroptikelements nicht gebrochen, da die Lichtstrahlen normal auf die jeweiligen Tangenten der Durchtrittspunkte der Kugel treffen.

Lichtstrahlen, die den Kugelmittelpunkt in weiterer Folge nicht schneiden, werden beim Übertritt durch die Lichtauskoppelfläche der Kugel gemäß dem Brechungsgesetz gebrochen. Je nachdem wie hoch der Brechungsindex des für das Sekundäroptikelement verwendete Material im Vergleich zu dem Brechungsindex des außerhalb des Sekundäroptikelements vorherrschenden Mediums, üblicherweise Luft, ist, werden die Lichtstrahlen unterschiedlich stark gebrochen.

Allgemein lässt sich aufgrund des Brechungsgesetzes sagen, dass ein Lichtstrahl beim Übergang von einem Medium in ein optisch dünneres Medium vom Lot der jeweiligen Einfallsebene weg gebrochen wird.

Durch das sich im Strahlengang befindliche Sekundärelement, welches als Teil einer Kugel ausgeformt ist, wird ein homogenerer Lichtaustrittskegel erzeugt, d.h. dass die Lichtstrahlen so gebrochen werden, dass mehr Lichtstrahlen auf den Reflektor treffen. Es hat sich gezeigt, dass die Teilfläche einer Kugel als Lichtauskoppelfläche des Sekundäroptikelements eine Zunahme des Lichtstroms am Reflektor bewirkt, im Gegensatz zu einer sonst üblichen planaren Lichtauskoppelfläche.

Weiters begünstigt die Kugelform einen konstanten Lichtstrom und konstante Lichtstärke bei geringfügigen Änderungen des Kugelradius der als Kugelfläche ausgebildeten Lichtauskoppelfläche des Sekundäroptikelements. Dadurch kann beispielsweise der Einfluss der bei der Herstellung auftretenden Toleranzen verringert werden.

Es hat sich ebenso gezeigt, dass die Kegelfläche als Lichtauskoppelfläche des Sekundäroptikelements eine Zunahme des Lichtstroms am Reflektor bewirkt, im Gegensatz zu einer sonst üblichen planaren Lichtauskoppelfläche.

Es hat sich ferner gezeigt, dass die Teilfläche eines Ellipsoiden als Lichtauskoppelfläche des Sekundäroptikelements eine Zunahme des Lichtstroms am Reflektor bewirkt, im Gegensatz zu einer sonst üblichen planaren Lichtauskoppelfläche.

Bei einer nicht erfindungsgemäßen Ausführungsform, kann die reflektierende Mantelfläche des Primäroptikelements einen parabolisch geformten Bereich mit einem Brennpunkt aufweisen, wobei der parabolisch geformte Bereich ein Umlenken der durch die Lichteinkoppelfläche des Primäroptikelements eintretenden Lichtstrahlen in Richtung der Lichtauskoppelfläche des Primäroptikelements ermöglicht. Dabei kann vorgesehen sein, dass der Brennpunkt des parabolisch geformten Bereichs des Primäroptikelements und der Kugelmittelpunkt in einem Punkt liegen.

Das als Teil einer Kugel ausgeformte Sekundäroptikelement fungiert in einer solchen nicht erfindungsgemäßen Ausführungsform zusätzlich als ausgleichendes Element, um Lichtstrahlen, die - beispielsweise aufgrund von zwangsläufig auftretenden Toleranzen - bei einer Reflektion an dem parabolisch geformten Bereich des Primäroptikelements nicht durch den Brennpunkt des parabolisch geformten Bereichs gehen, so von der kugelförmigen Lichtauskoppelfläche des Sekundäroptikelements gebrochen werden, dass diese Lichtstrahlen auf den effektiven Nutzbereich des Reflektors bzw. überhaupt auf den Reflektor gelenkt werden.

In der erfindungsgemäßen Ausführungsform ist vorgesehen, dass die reflektierende Mantelfläche des Primäroptikelements einen hyperbolisch geformten Bereich mit einem reellen Brennpunkt und einem virtuellen Brennpunkt aufweist, wobei der hyperbolisch geformte Bereich ein Umlenken der durch die Lichteinkoppelfläche des Primäroptikelements eintretenden Lichtstrahlen in Richtung der Lichtauskoppelfläche des Primäroptikelements ermöglicht.

Der reelle Brennpunkt des hyperbolisch geformten Bereichs des Primäroptikelements und der Kugelmittelpunkt liegen in einem Punkt.

In Hauptabstrahlrichtung des ersten Leuchtmittels vor der Lichteinkoppelfläche des Primäroptikelements ist eine Vorsatzoptik angeordnet, die eingerichtet ist, die von dem ersten Leuchtmittel emittierten Lichtstrahlen auf einen Punkt zu fokussieren.

Unter "Hauptabstrahlrichtung" ist die Richtung zu verstehen, in der das erste Leuchtmittel infolge seiner Richtwirkung am stärksten bzw. am meisten Licht abstrahlt.

Die Vorsatzoptik kann auch als TIR- Optikkörper ausgebildet sein.

Hierbei wird die Vorsatzoptik dazu eingerichtet die Lichtstrahlen des ersten Leuchtmittels auf den virtuellen Brennpunkt des hyperbolisch geformten Bereichs des Primäroptikelements zu fokussieren.

Ebenso kann vorgesehen sein, dass das Primäroptikelement und das Sekundäroptikelement stoffschlüssig miteinander verbunden sind, wobei vorzugsweise das Primäroptikelement und das Sekundäroptikelement einstückig ausgebildet sind und aus demselben Material bestehen.

Stoffschlüssige Verbindungen werden alle Verbindungen genannt, bei denen die Verbindungspartner durch atomare oder molekulare Kräfte zusammengehalten werden. Sie sind gleichzeitig nicht lösbare Verbindungen, die sich nur durch Zerstörung der Verbindungsmittel trennen lassen, beispielsweise Löten, Schweißen, Kleben, Vulkanisation. Weiters kann vorgesehen sein, dass die Vorsatzoptik mit dem Primäroptikelement stoffschlüssig verbunden ist, wobei vorzugsweise die Vorsatzoptik einstückig mit dem Primäroptikelement ausgebildet ist.

Ebenso kann vorgesehen sein, dass das Primäroptikelement und das Sekundäroptikelement aus Tarflon gebildet sind.

Tarflon ist ein transparentes, amorphes Material, welches sehr gute Temperatur- und Chemikalienresistenz aufweist. So ist Tarflon bis zu 135°C wärmebeständig und weist auch bei niedrigen Temperaturen eine hohe Schlagzähigkeit auf. Da ein Kraftfahrzeug, insbesondere ein Kraftfahrzeugscheinwerfer, im Winter sehr niedrigen und im Sommer sehr hohen Temperaturen ausgesetzt sein kann, sind die oben genannten Eigenschaften von besonderer Bedeutung für ein gewünschtes Material.

Ferner kann vorgesehen sein, dass das erste Leuchtmittel zumindest eine Lichtquelle aufweist.

Hierbei kann vorgesehen sein, dass die zumindest eine Lichtquelle als LED ausgebildet ist.

Ebenso kann vorgesehen sein, dass die zumindest eine Lichtquelle als Laserlichtquelle mit einem Lichtkonversionselement ausgebildet ist.

Da Lasereinrichtungen in der Regel kohärentes, monochromatisches Licht bzw. Licht in einem engen Wellenlängenbereich abstrahlen, aber bei einem Kraftfahrzeugscheinwerfer im Allgemeinen für das abgestrahlte Licht weißes Mischlicht bevorzugt bzw. gesetzlich vorgeschrieben ist, sind in Abstrahlrichtung der Lasereinrichtung sogenannte Lichtkonversionselemente zur Umwandlung von im Wesentlichen monochromatischem Licht in weißes bzw. polychromatisches Licht angeordnet, wobei unter "weißes Licht" Licht einer solchen Spektralzusammensetzung verstanden wird, welches beim Menschen den Farbeindruck "weiß" hervorruft. Dieses Lichtkonversionselement ist zum Beispiel in Form eines oder mehrerer Photolumineszenzkonverter bzw. Photolumineszenzelemente ausgebildet, wobei einfallende Laserstrahlen der Lasereinrichtung auf das in der Regel Photolumineszenzfarbstoff aufweisende Lichtkonversionselement auftreffen und diesen Photolumineszenzfarbstoff zur Photolumineszenz anregen, und dabei Licht in einer dem Licht der einstrahlenden Lasereinrichtung verschiedenen Wellenlänge bzw. Wellenlängenbereiche abgibt. Die Lichtabgabe des Lichtkonversionselements weist dabei im Wesentlichen Charakteristiken eines Lambert'schen Strahlers auf.

Bei Lichtkonversionselementen wird zwischen reflektiven und transmissiven Konversionselementen unterschieden.

Die Begriffe "reflektiv" und "transmissiv" beziehen sich hierbei auf den Blauanteil des konvertierten weißen Lichts. Bei einem transmissiven Aufbau ist die Hauptausbreitungsrichtung des Blaulichtanteils nach dem Durchtritt durch das Konvertervolumen bzw. Konversionselements im Wesentlichen gleichgerichtet zur Ausbreitungsrichtung des Ausgangslaserstrahls. Bei einem reflektiven Aufbau wird der Laserstrahl an einer dem Konversionselement zurechenbaren Grenzfläche reflektiert bzw. umgelenkt, sodass der Blaulichtanteil eine andere Ausbreitungsrichtung aufweist als der Laserstrahl, welcher in der Regel als blauer Laserstrahl ausgeführt ist.

Im Reflexionsbereich des parabolische bzw. hyperbolisch geformten Mantelbereichs des Primäroptikelements können als passive Sicherheitssensorik Störungen eingebracht werden, wie zum Beispiel Oberflächenstrukturierungen, Stufen oder ein Loch, die in einem Fehlerfall ein Austreten von Laserstrahlen einer Lasereinrichtung verhindern oder reduzieren. Der gleiche Bereich kann auch für die Platzierung einer aktiven Sicherheitssensorik genutzt werden.

Weitere Möglichkeiten oder Erweiterungen des Lasersicherheitskonzeptes sind zum Beispiel sogenannte "Strahlungsfallen", welche als laserlichtabsorbierende Schicht an der Reflexionsfläche des parabolisch bzw. hyperbolisch geformten Bereichs außen anliegt und im Falle einer Fehlfunktion oder Beschädigung des Lichtkonversionselements weißes Mischlicht transmittiert und Laserlicht absorbiert.

Ein weiteres Beispiel eines Lasersicherheitskonzepts sind in sicherheitsrelevanten Positionen angeordnete Lichtsensoren, die jeweils Lichtintensitäten des von der Lasereinrichtung emittierten Lichts und Lichtintensitäten des von dem Lichtkonversionselement emittierten Lichts an diesen Positionen mit gespeicherten, im fehlerfreien Betrieb gemessene Referenzintensitäten der jeweiligen Strahlungsarten vergleichen, wobei bei Überschreitung einer vorher eingestellten, erlaubten Abweichung die Lasereinrichtung selbsttätig ausgeschaltet wird.

Mit Vorteil kann vorgesehen sein, dass das erste Leuchtmittel zur Erzeugung einer Lichtverteilung oder einer Teil-Lichtverteilung einer ersten Lichtverteilung, beispielsweise Abblendlicht oder Fernlicht, vorgesehen ist.

Bei einer vorteilhaften Variante kann eine solche Beleuchtungsvorrichtung zur Erzeugung der Lichtfunktion "Abblendlicht" eingesetzt werden, wobei die Beleuchtungsvorrichtung bei dieser Lichtfunktion "Abblendlicht" eine Lichtverteilung erzeugt, welche in einem eingebauten Zustand der Beleuchtungsvorrichtung in einem Fahrzeug, vor dem Fahrzeug eine den gesetzlichen Anforderungen entsprechende Abblendlichtverteilung erzeugt.

Es kann vorgesehen sein, dass eine solche Beleuchtungsvorrichtung zur Erzeugung der Lichtfunktion "Fernlicht" eingesetzt werden kann, wobei die Beleuchtungsvorrichtung bei dieser Lichtfunktion "Fernlicht" eine Lichtverteilung erzeugt, welche in einem eingebauten Zustand der Beleuchtungsvorrichtung in einem Fahrzeug, vor dem Fahrzeug eine den gesetzlichen Anforderungen entsprechende Fernlichtverteilung erzeugt.

Die oben genannten, aufgezählten Lichtfunktionen bzw. Lichtverteilungen sind nicht abschließend, wobei die Beleuchtungsvorrichtung auch Kombinationen dieser Lichtfunktionen erzeugen kann und/oder nur eine Teillichtverteilung erzeugt, also beispielsweise nur einen Teil einer Fern-, Abblend-, Nebel- oder Tagfahrlichtverteilung.

Vorzugsweise ist vorgesehen, dass im Fall, dass zwei oder mehr Leuchtdioden vorgesehen sind, jede Leuchtdiode unabhängig von den anderen Leuchtdioden angesteuert werden kann.

Jede Leuchtdiode kann somit unabhängig von den anderen Leuchtdioden einer Lichtquelle ein- und ausgeschaltet werden, und vorzugsweise, wenn es sich um dimmbare Leuchtdioden handelt, auch unabhängig von den anderen Leuchtdioden der Lichtquelle gedimmt werden.

Es kann günstig sein, wenn der Reflektor als Freiformreflektor ausgebildet ist.

Ein Freiformreflektor ist ein Reflektor, dessen besondere Eigenschaft es ist, dass die Reflektorform keiner mathematischen Regelfläche entspricht. Mit Hilfe von Freiformreflektoren kann beispielsweise eine asymmetrische Ausleuchtung ohne die sonst nötige Streuscheibe realisieren werden, wobei gleichzeitig die nutzbare Lichtintensität erhöht wird.

Ebenso kann vorgesehen sein, dass der Reflektor als parabolischer Reflektor mit einem Brennpunkt ausgebildet ist,
Dabei kann vorgesehen sein, dass der Brennpunkt des parabolischen Reflektors und der Kugelmittelpunkt in einem Punkt liegen.

Parallelisierte Strahlen der Vorsatzoptik müssen parallel zur optischen Achse des parabolisch geformten Bereichs einfallen, um in den Brennpunkt des parabolisch geformten Bereichs einzufallen bzw. umgelenkt zu werden.

Weiters kann vorgesehen sein, dass der Reflektor als hyperbolischer Reflektor mit einem Brennpunkt ausgebildet ist.

Dabei kann vorgesehen sein, dass der Brennpunkt des hyperbolischen Reflektors und der Kugelmittelpunkt in einem Punkt liegen.

Es kann vorgesehen sein, dass ein Kraftfahrzeugscheinwerfer zumindest eine Beleuchtungsvorrichtung umfasst.

Dabei kann vorgesehen sein, dass der Kraftfahrzeugscheinwerfer ferner ein zweites Leuchtmittel zur Erzeugung einer Lichtverteilung oder einer Teil-Lichtverteilung einer zweiten Lichtfunktion, beispielsweise Abblendlicht oder Fernlicht, vorgesehen ist.

Vorteilhafterweise kann das zweite Leuchtmittel zumindest eine Lichtquelle aufweisen.

Es kann günstig sein, wenn die zumindest eine Lichtquelle als LED oder als Laserlichtquelle mit einem Lichtkonversionselement ausgebildet ist.

Mit Vorteil ist vorgesehen, wenn das erste und das zweite Leuchtmittel auf einer gemeinsamen Leiterplatte angeordnet sind.

Vorzugsweise sind die Leuchtmittel, welche jeweils für unterschiedliche Lichtfunktionen, beispielsweise eine Abblendlichtfunktion und eine Fernlichtfunktion, vorgesehen sind und unabhängig voneinander ansteuerbar sind, auf einer gemeinsamen Leiterplatte angeordnet.

Diese Vorgehensweise wirkt sich in der Regel platzsparend in einem Kraftfahrzeugscheinwerfer aus, wobei nun dafür gesorgt werden muss, dass beide Lichtfunktionen separat und/oder gemeinsam ohne gegenseitige Beeinflussung vor dem Kraftfahrzeug erzeugt werden können.

Nachfolgend wird die Erfindung anhand von beispielhaften Zeichnungen näher erläutert. Hierbei zeigt
Fig. 1 eine nicht erfindungsgemäße Beleuchtungsvorrichtung mit einem Primär- und Sekundäroptikelement und einem parabolischen Reflektor, wobei das Sekundäroptikelement als Teil einer Kugel ausgebildet ist und das Primäroptikelement einen parabolisch geformten Bereich aufweist,
Fig. 2 ein erfindungsgemäßes Beispiel einer Beleuchtungsvorrichtung mit einem parabolischen Reflektor, wobei das Primäroptikelement einen hyperbolisch geformten Bereich aufweist,
Fig. 3 ein weiteres nicht erfindungsgemäßes Beispiel einer Beleuchtungsvorrichtung mit einem hyperbolischen Reflektor, wobei das Primäroptikelement einen parabolisch geformten Bereich aufweist,
Fig. 4 ein weiteres erfindungsgemäßes Beispiel einer Beleuchtungsvorrichtung mit einem hyperbolischen Reflektor, wobei das Primäroptikelement einen hyperbolisch geformten Bereich aufweist,
Fig. 5 eine Beleuchtungsvorrichtung aus dem Stand der Technik mit einer planaren Lichtauskoppelfläche und einen beispielhaften Strahlengang,
Fig. 6 einen beispielhaften Strahlengang durch eine beispielhafte Beleuchtungsvorrichtung,
Fig. 7 ein weiteres nicht erfindungsgemäßes Beispiel einer Beleuchtungsvorrichtung mit einem Freiformreflektor, wobei das Sekundäroptik als Kegel ausgebildet ist und das Primäroptikelement einen parabolisch geformten Bereich aufweist,
Fig. 8 eine weitere nicht erfindungsgemäße Beleuchtungsvorrichtung mit einem Freiformreflektor, wobei das Sekundäroptikelement als Kegel ausgebildet ist und das Primäroptikelement einen hyperbolisch geformten Bereich aufweist,
Fig. 9 zeigt schematisch einen Kraftfahrzeugscheinwerfer mit einer nicht erfindungsgemäßen Beleuchtungsvorrichtung und einem zweiten Leuchtmittel,
Fig. 10 ein weiteres nicht erfindungsgemäßes Beispiel einer Beleuchtungsvorrichtung mit einem Freiformreflektor, wobei das Sekundäroptik als Teil eines Ellipsoiden ausgebildet ist und das Primäroptikelement einen parabolisch geformten Bereich aufweist, und
Fig. 11 ein weiteres nicht erfindungsgemäßes Beispiel einer Beleuchtungsvorrichtung mit einem Freiformreflektor, wobei das Sekundäroptik als Teil eines Ellipsoiden ausgebildet ist und das Primäroptikelement einen hyperbolisch geformten Bereich aufweist.

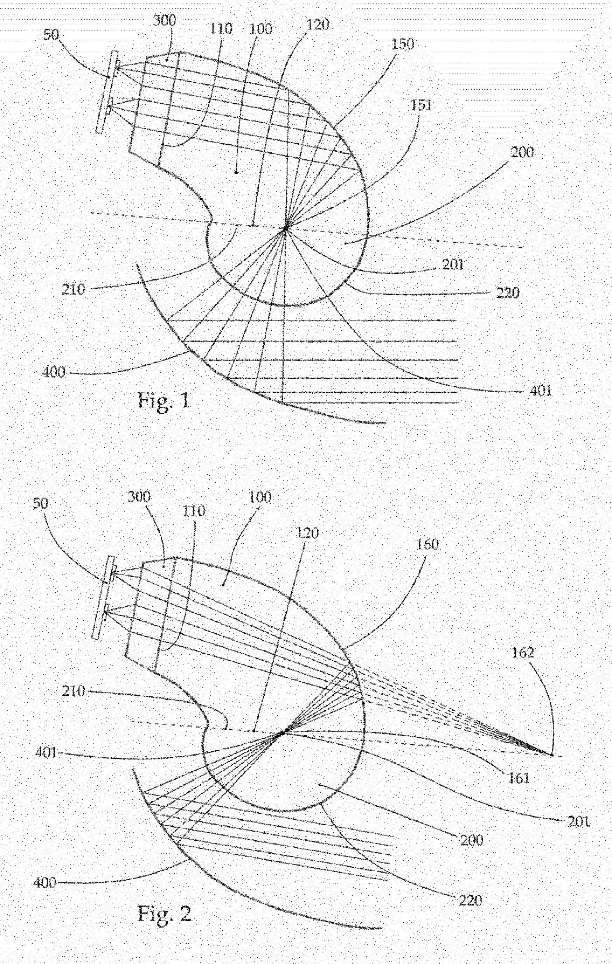

In **Fig. 1** ist ein in Hauptabstrahlrichtung eines ersten Leuchtmittels **50** angeordnetes, lichtleitendes Primäroptikelement **100** dargestellt, das auf einer dem ersten Leuchtmittel **50** zugewandten Seite eine Lichteinkoppelfläche **110** zur Einkopplung von Licht in das Primäroptikelement **100,** auf eine dem ersten Leuchtmittel **50** abgewandten Seite eine Lichtauskoppelfläche **120** sowie eine sich zwischen der Lichteinkoppelfläche **110** und der Lichtauskoppelfläche **120** erstreckende Mantelfläche aufweist, an der das eingekoppelte Licht durch Totalreflexion in Richtung der Lichtauskoppelfläche **120** des Primäroptikelements weiterleitbar ist.

Unter "Hauptabstrahlrichtung" ist die Richtung zu verstehen, in der das erste Leuchtmittel infolge ihrer Richtwirkung am stärksten bzw. am meisten Licht abstrahlt.

Die reflektierende Mantelfläche des Primäroptikelements **100** weist hierbei einen parabolisch geformten Bereich **150** mit einem Brennpunkt **151** auf, wobei der parabolisch geformte Bereich **150** ein Umlenken der durch die Lichteinkoppelfläche **110** des Primäroptikelements **100** eintretenden Lichtstrahlen in Richtung der Lichtauskoppelfläche **120** des Primäroptikelements **100** ermöglicht.

In Hauptabstrahlrichtung des ersten Leuchtmittels **50,** welche in **Fig. 1** zwei Lichtquellen in Form von LEDs umfasst, ist vor der Lichteinkoppelfläche **110** des Primäroptikelements **100** eine Vorsatzoptik **300** angeordnet, die eingerichtet ist, die von dem ersten Leuchtmittel **50** emittierten Lichtstrahlen zu parallelisieren oder zu fokussieren.

In dem nicht erfindungsgemäßen Beispiel aus **Fig. 1** werden die Lichtstrahlen des ersten Leuchtmittels **50** von der Vorsatzoptik **300** parallelisiert bzw. kollimiert und so auf den parabolisch geformten Bereich **150** des Primäroptikelements **100** gelenkt, dass die Lichtstrahlen nach der Reflexion an dem parabolisch geformten Bereich **150** in dem Brennpunkt **151** des parabolisch geformten Bereichs **150** gebündelt werden bzw. diesen schneiden.

Ferner ist ein Sekundäroptikelement **200** in Lichtabstrahlrichtung nach der Lichtauskoppelfläche des Primäroptikelements **100** angeordnet, wobei das Sekundäroptikelement **200** auf einer der Lichtauskoppelfläche **120** des Primäroptikelements **100** zugewandten Seite eine Lichteinkoppelfläche **210** und auf einer dem Primäroptikelement **100** abgewandten Seite eine Lichtauskoppelfläche **220** aufweist.

Das Sekundäroptikelement ist in **Fig. 1** als Teil einer Kugel mit einem Kugelmittelpunkt **201** ausgebildet, wobei der Brennpunkt **151** des parabolisch geformten Bereichs **150** des Primäroptikelements **100** und der Kugelmittelpunkt **201** in einem Punkt liegen.

Sowohl das Primäroptikelement **100** als auch das Sekundäroptikelement **200** sind in den gezeigten Beispielen aus einem Material gefertigt, wobei das Material eine höhere Brechzahl aufweist als das umgebende Medium des Primäroptikelements **100** bzw. des Sekundäroptikelements **200,** beispielsweise Luft.

Überdies ist das Primäroptikelement **100** und das Sekundäroptikelement **200** stoffschlüssig verbunden, wobei das Primäroptikelement **100** und das Sekundäroptikelement **200** vorzugsweise einstückig ausgebildet sind, also aus einem Stück gefertigt sind, und aus demselben Material bestehen, vorzugsweise Tarflon, d.h. dass die Lichtauskoppelfläche **120** des Primäroptikelements **100** und die Lichteinkoppelfläche **210** des Sekundäroptikelements **200** in einer gedachten Ebene liegen.

Ferner kann, wie in den Figuren gezeigten Beispielen gezeigt ist, vorgesehen sein, dass die Vorsatzoptik **300** mit dem Primäroptikelement **100** stoffschlüssig verbunden ist, wobei vorzugsweise die Vorsatzoptik **300** einstückig mit dem Primäroptikelement **100** ausgebildet ist.

Weiters ist in Lichtabstrahlrichtung nach der Lichtauskoppelfläche **220** des Sekundäroptikelements **200** ein parabolisch geformter Reflektor **400** mit einem Brennpunkt **401** angeordnet, wobei der Brennpunkt **401** des Reflektors **400** und der Kugelmittelpunkt **201** in einem Punkt liegen, d.h. dass der Kugelmittelpunkt **201,** der Brennpunkt **151** des parabolisch geformten Bereichs **150** des Primäroptikelements **100** und der Brennpunkt **401** des parabolischen Reflektors **400** in einem Punkt liegen bzw. zusammenfallen.

Der Reflektor erzeugt hierbei eine Lichtverteilung oder eine Teil-Lichtverteilung einer Lichtfunktion, beispielsweise eine Abblendlichtfunktion bzw. Abblendlichtverteilung oder eine Fernlichtfunktion bzw. eine Fernlichtverteilung. Vorzugsweise ist die Beleuchtungsvorrichtung in einem Kraftfahrzeugscheinwerfer bzw. als Kraftfahrzeugscheinwerfer in einem Kraftfahrzeug eingebaut, wobei die Beleuchtungsvorrichtung die oben genannten Lichtfunktionen bzw. Lichtverteilungen vor dem Kraftfahrzeug, insbesondere in Fahrtrichtung des Kraftfahrzeugs, erzeugt bzw. abbildet.

Dies gilt allgemein für die gegenständliche Beleuchtungsvorrichtung sowie die nachfolgenden Ausführungsbeispiele in der Beschreibung.

Der Begriff "Fahrtrichtung" bezeichnet in diesem Kontext die Richtung, in der sich ein angetriebenes Kraftfahrzeug wie konstruktiv vorgesehen bewegt. Ein technisch mögliches Rückwärtsfahren wird in diesem Zusammenhang nicht als Fahrtrichtung definiert.

Die oben genannten, aufgezählten Lichtfunktionen bzw. Lichtverteilungen sind nicht abschließend, wobei die Beleuchtungsvorrichtung auch Kombinationen dieser Lichtfunktionen bzw. Lichtverteilungen erzeugen kann und/oder nur eine Teillichtverteilung erzeugt, beispielweise nur einen Teil einer Fern- oder Abblendlichtfunktion bzw. Verteilung.

Es sei angemerkt, dass zur Erzeugung solcher Lichtfunktionen bzw. Lichtverteilungen die Beleuchtungsvorrichtung keine optischen Linsen umfasst.

In **Fig. 1** sind weiters beispielhafte Strahlengänge zu sehen, die keine Umlenkungen durch das teilweise kugelförmige Sekundäroptikelement **200** erfahren, da die gezeigten Strahlengänge durch den Brennpunkt **151** des parabolisch geformten Bereichs **150** und somit auch dem Kugelmittelpunkt **201** verlaufen.

In **Fig. 2** ist eine erfindungsgemäße Ausführungsform zu sehen, wobei im Gegensatz zu dem Beispiel aus **Fig. 1** die reflektierende Mantelfläche des Primäroptikelements **100** einen hyperbolisch geformten Bereich **160** mit einem Brennpunkt **161** und einem virtuellen Brennpunkt **162** aufweist. Der hyperbolisch geformte Bereich **160** ermöglicht ein Umlenken der durch die Lichteinkoppelfläche **110** des Primäroptikelements **100** eintretenden Lichtstrahlen in Richtung der Lichtauskoppelfläche **120** des Primäroptikelements **100.**

Ähnlich wie in **Fig. 1** liegen der Brennpunkt **161** des hyperbolisch geformten Bereichs **160** des Primäroptikelements **100** und der Kugelmittelpunkt **201** des Sekundäroptikelements **200** in einem Punkt. Ferner liegt auch der Brennpunkt **401** des parabolischen Reflektors **400** in **Fig. 2** und der Kugelmittelpunkt **201** in einem Punkt.

Die in **Fig. 2** gezeigte Vorsatzoptik **300** ist im Unterschied zu dem Beispiel aus **Fig. 1** dazu eingerichtet, die Lichtstrahlen des ersten Leuchtmittels **50** in dem virtuellen Brennpunkt **162** des hyperbolisch geformten Bereichs **160** des Primäroptikelements **100** zu fokussieren bzw. zu bündeln, wobei die Lichtstrahlen nach der Reflexion an dem hyperbolisch geformten Bereich **160** in dem Brennpunkt **161** des hyperbolisch geformten Bereichs **160** gebündelt werden bzw. diesen schneiden.

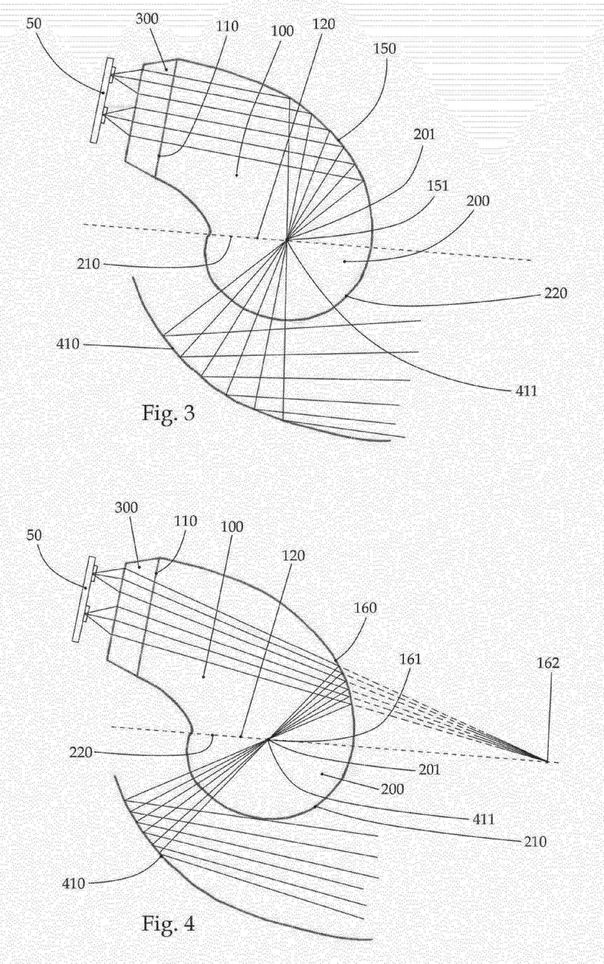

**Fig. 3** zeigt das Beispiel aus **Fig. 1****,** wobei statt dem parabolischen Reflektor **400** ein hyperbolischer Reflektor **410** mit einem Brennpunkt **411** angeordnet ist.

**Fig. 4** zeigt das Beispiel aus **Fig. 2****,** wobei statt dem parabolischen Reflektor **400** ein hyperbolischer Reflektor **410** mit einem Brennpunkt **411** angeordnet ist.

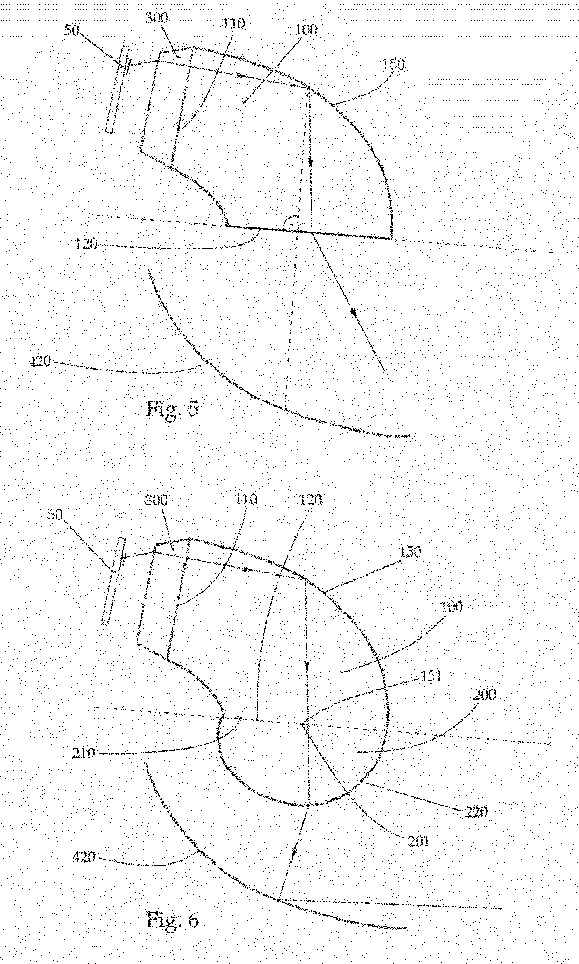

In **Fig. 5** ist ein Primäroptikelement **100** mit einer Lichteinkoppelfläche **110** und einer planaren Lichtauskoppelfläche **120** sowie ein in Lichtabstrahlrichtung nach der Lichtauskoppelfläche **120** des Primäroptikelements **100** angeordneter Reflektor dargestellt. Im Gegensatz zu den Beleuchtungsvorrichtungen aus **Fig. 1, 2****,** **3** und **4**, fehlt in **Fig. 5** ein Sekundäroptikelement **200.** Weiters ist in **Fig. 5** ein möglicher Strahlengang eingezeichnet, wobei damit gezeigt werden soll, dass Lichtstrahlen beim Übergang von dem Primäroptikelement **100** in das umliegende Medium mit geringerer Brechzahl gemäß dem Brechungsgesetz derart an der planaren Lichtauskoppelfläche **120** des Primäroptikelements **100** gebrochen werden, dass diese vom Lot, welches ebenfalls in der **Fig. 5** dargestellt ist, weggebrochen werden und dadurch weniger Lichtstrahlen auf eine vom jeweilig verwendeten Reflektor abhängige, effektive Nutzfläche des entsprechenden Reflektors einfallen können.

**Fig. 6** zeigt im Wesentlichen die beispielhaften Ausführungen aus den vorhergehenden Figuren, wobei mit dem in **Fig. 6** eingezeichneten beispielhaften Strahlengang verdeutlicht werden soll, wie Lichtstrahlen beim Übergang von dem Sekundärelement **200** in das umliegende Medium mit geringerer Brechzahl an der Lichtauskoppelfläche **220** des Sekundäroptikelements **200** gebrochen werden im Gegensatz zu dem Strahlengang aus der vorherigen **Fig. 5****.** Hierbei ist es unerheblich, ob der reflektierende Bereich der Mantelfläche des Primäroptikelements **100** einen parabolisch oder hyperbolisch geformten Bereich aufweist.

Im Gegensatz zu den dargestellten Beleuchtungsvorrichtungen aus **Fig. 1, 2****,** **3** und **4****,** ist ein beispielhafter Strahlengang gezeigt, der nach der Reflexion an der Mantelfläche des Primäroptikelements nicht durch den entsprechenden Brennpunkt **151, 161** bzw. den Kugelmittelpunkt **201** verläuft, wobei der jeweilige Brennpunkt abhängig davon ist, ob das Primäroptikelement einen parabolisch oder einen hyperbolisch geformten Bereich **150, 160** aufweist.

Durch die als Teil einer Kugelfläche ausgebildete Lichtauskoppelfläche **220** des Sekundäroptikelements **200** wird der gleiche beispielhafte Lichtstrahl aus **Fig. 5** auf die effektive Nutzfläche eines in Lichtaustrittsrichtung nachgeschalteten Reflektors gebrochen.

Es sei darauf hingewiesen, dass die in **Fig. 5** gezeigte Beleuchtungsvorrichtung kein erfindungsgemäßes Beispiel darstellt.

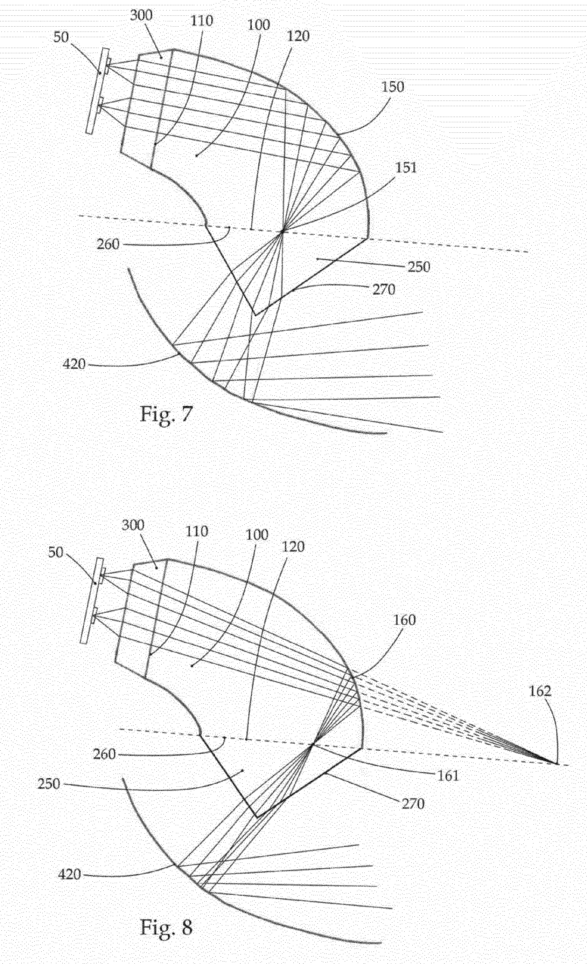

In **Fig. 7** ist eine weitere nicht erfindungsgemäße Ausführungsform zu sehen, wobei im Gegensatz zu dem Beispiel aus den vorherigen Figuren das Sekundärelement **250** als Kegel mit einer Kegelgrundfläche und der Reflektor als Freiformreflektor **420** ausgebildet ist. Der Mittelpunkt der Kegelgrundfläche, welche gleichzeitig die Lichteinkoppelfläche **260** des als Kegel ausgebildeten Sekundäroptikelements darstellt, kann vorteilhafterweise so angeordnet sein, dass er mit dem Brennpunkt **151** des parabolisch geformten Bereichs **150** zusammenfällt. Die Mantelfläche des Kegels **250** stellt die Lichtauskoppelfläche **270** des Sekundäroptikelements **250** dar.

Ein Freiformreflektor ist ein Reflektor, dessen besondere Eigenschaft es ist, dass die Reflektorform keiner mathematischen Regelfläche entspricht.

Das Primäroptikelement **100** weist in dem in **Fig. 7** gezeigt Beispiel einen parabolisch geformten Bereich **150** mit einem Brennpunkt **151** auf, wobei die Vorsatzoptik **300** die Lichtstrahlen des ersten Leuchtmittels **50** parallelisiert bzw. kollimiert und so auf den parabolisch geformten Bereich **150** des Primäroptikelements **100** lenkt, dass die Lichtstrahlen nach der Reflexion an dem parabolisch geformten Bereich **150** in dem Brennpunkt **151** des parabolisch geformten Bereichs **150** gebündelt werden bzw. diesen schneiden.

**Fig. 8** zeigt eine weitere nicht erfindungsgemäße Ausführungsform, wobei im Gegensatz zu der vorherigen Beleuchtungsvorrichtung aus **Fig. 7** die reflektierende Mantelfläche des Primäroptikelements **100** einen hyperbolisch geformten Bereich **160** mit einem reellen Brennpunkt **161** und einem virtuellen Brennpunkt **162** aufweist und die gezeigte Vorsatzoptik **300** dazu eingerichtet ist, die Lichtstrahlen des ersten Leuchtmittels **50** in dem virtuellen Brennpunkt **162** des hyperbolisch geformten Bereichs **160** des Primäroptikelements **100** zu fokussieren bzw. zu bündeln, wobei die Lichtstrahlen nach der Reflexion an dem hyperbolisch geformten Bereich **160** in dem Brennpunkt **161** des hyperbolisch geformten Bereichs **160** gebündelt werden bzw. diesen schneiden. Der Mittelpunkt der Kegelgrundfläche fällt in dieser Beleuchtungsvorrichtung nicht mit dem Brennpunkt **161** des hyperbolisch geformten Bereichs **160** zusammen, wobei auch hier vorgesehen sein kann, dass der Mittelpunkt der Kegelgrundfläche mit dem Brennpunkt **161** des hyperbolisch geformten Bereichs zusammenfällt.

Die in **Fig. 7** und **8** dargestellten Lichtstrahlen bzw. Strahlengänge zeigen, dass die Lichtstrahlen - verglichen mit einer planaren Auskoppelfläche **120** - durch das als Kegel ausgebildete Sekundäroptikelement **250** gebündelter bzw. konzentrierter auf einen effektiven Nutzbereich des Freiformreflektors **420** einfallen.

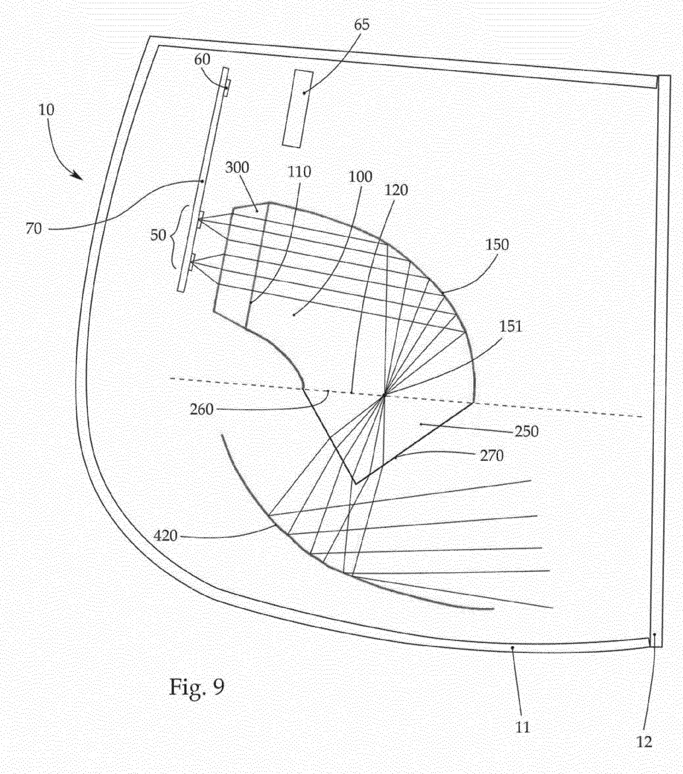

In **Fig. 9** ist ein Kraftfahrzeugscheinwerfer **10** mit einem Gehäuse **11** und einer Abdeckscheibe **12,** die nicht als optische Linse fungiert, wobei eine nicht erfindungsgemäße Beleuchtungsvorrichtung in dem Kraftfahrzeugscheinwerfer **10** angeordnet ist.

Hierbei umfasst die Beleuchtungsvorrichtung wie in den vorherigen Beleuchtungsvorrichtungen ein erstes Leuchtmittel **50,** welches zur Erzeugung einer Lichtverteilung oder einer Teil-Lichtverteilung einer ersten Lichtfunktion, beispielsweise Abblendlicht oder Fernlicht, vorgesehen ist, wobei die von dem ersten Leuchtmittel **50** emittierten Lichtstrahlen durch einen Kollimator **300** parallel auf einen parabolisch geformten Mantelbereich **150** eines Primäroptikelements **100** mit einem Brennpunkt **151** treffen.

Der parabolisch geformte Bereich **150** ermöglicht ein Umlenken der einfallenden Lichtstrahlen in Richtung einer Lichtauskoppelfläche **120** des Primäroptikelements **100.** In Lichtabstrahlrichtung nach der Lichtauskoppelfläche **120** des Primäroptikelements **100** ist eine Lichteinkoppelfläche **260** eines Sekundäroptikelements **250** angeordnet, welches Sekundäroptikelement **250** in der Beleuchtungsvorrichtung aus **Fig. 9** als Kegel mit einer Kegelgrundfläche ausgebildet ist. Der Mittelpunkt der Kegelgrundfläche kann, wie in den vorherigen Ausführungsbeispielen erwähnt, mit dem Brennpunkt **151** des Primäroptikelements **100** zusammenfallen.

Eine Diskussion der Strahlenverläufe hinsichtlich des ersten Leuchtmittels **50** wurde bereits in den vorherigen Beispielen erläutert und ist diesen im Zusammenhang mit den nicht erfindungsgemäßen Beispiel in **Fig. 9** zu entnehmen.

Der Kraftfahrzeugscheinwerfer **10** in **Fig. 9** umfasst ferner ein zweites Leuchtmittel **60,** das in **Fig. 9** als LED ausgeführt ist und zur Erzeugung einer Lichtverteilung oder einer Teil-Lichtverteilung einer zweiten Lichtfunktion, beispielsweise Abblendlicht oder Fernlicht, vorgesehen ist, wobei das erste und das zweite Leuchtmittel **50, 60** auf einer gemeinsamen Leiterplatte **70** angeordnet sind. Hinsichtlich der Vollständigkeit ist eine in Hauptabstrahlrichtung des zweiten Leuchtmittels **60** nachgeschaltete, Licht formende Optik **65** angeordnet, welche beispielsweise als Linse oder als Reflektor ausgebildet sein kann. Aus Gründen der Übersichtlichkeit wurde auf mögliche Strahlengänge - ausgehend von dem zweiten Leuchtmittel **60** - verzichtet.

So ist es möglich, die Leuchtmittel **50, 60,** welche jeweils zur Erzeugung von unterschiedlichen Lichtfunktionen vorgesehen sind, beispielsweise Abblendlicht und Fernlicht, auf einer gemeinsamen Leiterplatte **70** anzuordnen bzw. herzustellen.

Diese Vorgehensweise wirkt sich in der Regel platzsparend in einem Kraftfahrzeugscheinwerfer aus, wobei nun dafür gesorgt werden muss, dass beide Lichtfunktionen separat und/oder gemeinsam ohne gegenseitige Beeinflussung vor dem Kraftfahrzeug erzeugt werden können, wobei das Primäroptikelement **100,** das Sekundäroptikelement **200** und gegebenenfalls die Vorsatzoptik **300** gewissermaßen als Umlenkoptik dienen.

Weiters können die Leuchtmittel **50, 60** unabhängig voneinander ansteuer- und dimmbar sein.

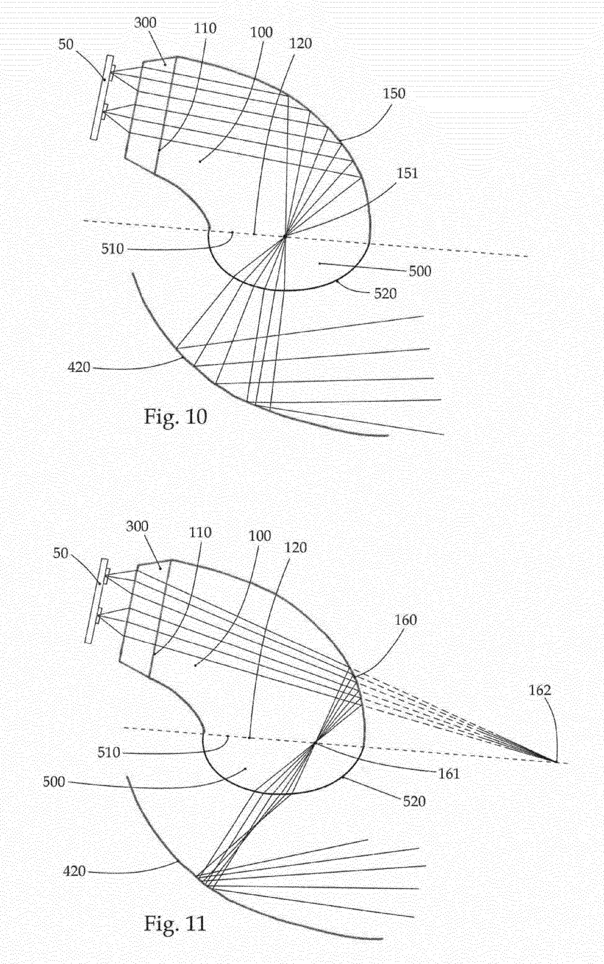

**Fig. 10** und **Fig. 11** zeigen jeweils weitere nicht erfindungsgemäße Beleuchtungsvorrichtungen, wobei der Aufbau der Beleuchtungsvorrichtungen in **Fig. 10** und **Fig. 11** den Beispielen aus **Fig. 7** und **Fig. 8** im Wesentlichen gleichen, wohingegen das Sekundärelement **500** in **Fig. 10** und **11** als Teil eines Ellipsoiden ausgebildet ist.

Die Beleuchtungsvorrichtung in **Fig. 10** zeigt ferner ein erstes Leuchtmittel **50** sowie ein Primäroptikelement **100** mit einem parabolisch ausgeformten Bereich **150,** wobei die Lichtstrahlen des ersten Leuchtmittels **50** auf den parabolisch geformten Bereich **150** einfallen und in einem Brennpunkt **151** des parabolisch geformten Bereichs **150** gebündelt umgelenkt werden bzw. diesen Brennpunkt **151** schneiden. Der Brennpunkt **151** liegt vorzugsweise in einer Lichteinkoppelfläche **510** des als Teil eines Ellipsoiden ausgebildeten Sekundäroptikelements **500,** wobei die Lichtstrahlen über eine Lichtauskoppelfläche **520** des Sekundärelements **500** auf einen Freiformreflektor **420** fallen.

Die Beleuchtungsvorrichtung in **Fig. 11** zeigt weiters ein erstes Leuchtmittel **50** sowie ein Primäroptikelement **100** mit einem hyperbolisch ausgeformten Bereich **160,** wobei die Lichtstrahlen des ersten Leuchtmittels **50** auf den hyperbolisch geformten Bereich **160** einfallen und in einem reellen Brennpunkt **161** des parabolisch geformten Bereichs **160** gebündelt umgelenkt werden bzw. diesen reellen Brennpunkt **161** schneiden. Der Brennpunkt **161** liegt vorzugsweise in einer Lichteinkoppelfläche **510** des als Teil eines Ellipsoiden ausgebildeten Sekundäroptikelements **500,** wobei die Lichtstrahlen über eine Lichtauskoppelfläche **520** des Sekundärelements **500** auf einen Freiformreflektor **420** fallen.

Für eine genauere Analyse der jeweiligen Strahlengänge sei auf die vorherigen Beispiele und dazu getätigten Ausführungen verwiesen.

Es kann auch vorgesehen sein, dass beispielsweise ein Freiformreflektor für die Beispiele in den **Fig. 1, 2****,** **3, 4****,** **5** und **6** angeordnet sein kann.

### BEZUGSZEICHENLISTE

| | |
|---|---|
| Kraftfahrzeugscheinwerfer ... | 10 |
| Scheinwerfergehäuse... | 11 |
| Abdeckscheibe... | 12 |
| Erstes Leuchtmittel... | 50 |
| Zweites Leuchtmittel... | 60 |
| Licht formende Optik... | 65 |
| Leiterplatte... | 70 |
| Primäroptikelement... | 100 |
| Lichteinkoppelfläche (PO)... | 110 |
| Lichtauskoppelfläche (PO)... | 120 |
| Parallel geformter Bereich... | 150 |
| Brennpunkt par. geformter Bereich... | 151 |
| Hyperbolisch geformter Bereich... | 160 |
| Brennpunkt hyp. geformter Bereich... | 161 |
| Virtueller Brennpunkt hyp. gef. Bereich... | 162 |
| Sekundäroptikelement (Kugel)... | 200 |
| Kugelmittelpunkt... | 201 |
| Lichteinkoppelfläche (SO - Kugel)... | 210 |
| Lichtauskoppelfläche (SO - Kugel)... | 220 |
| Sekundäroptikelement (Kegel)... | 250 |
| Lichteinkoppelfläche (SO - Kegel)... | 260 |
| Lichtauskoppelfläche (SO - Kegel)... | 270 |
| Vorsatzoptik... | 300 |
| Hyperbolischer Reflektor... | 400 |
| Brennpunkt hyp. Reflektor... | 401 |
| Parabolischer Reflektor... | 410 |
| Brennpunkt par. Reflektor... | 411 |
| Freiformreflektor ... | 420 |
| Sekundäroptikelement (Ellipsoid)... | 500 |
| Lichteinkoppelfläche (SO - Ellipsoid)... | 510 |
| Lichtauskoppelfläche (SO - Ellipsoid)... | 520 |

## Patentansprüche

1. Beleuchtungsvorrichtung für einen Kraftfahrzeugscheinwerfer, umfassend
- ein in Hauptabstrahlrichtung eines ersten Leuchtmittels (50) angeordnetes, lichtleitendes Primäroptikelement (100), das auf einer dem ersten Leuchtmittel (50) zugewandten Seite eine Lichteinkoppelfläche (110) zur Einkopplung von Lichtstrahlen in das Primäroptikelement (100), auf eine dem ersten Leuchtmittel (50) abgewandten Seite eine Lichtauskoppelfläche (120) sowie eine sich zwischen der Lichteinkoppelfläche (110) und der Lichtauskoppelfläche (120) erstreckende Mantelfläche aufweist, an der das eingekoppelte Licht durch Totalreflexion in Richtung der Lichtauskoppelfläche (120) des Primäroptikelements (100) weiterleitbar ist,
- ein in Lichtabstrahlrichtung nach der Lichtauskoppelfläche (120) des Primäroptikelements (100) angeordnetes Sekundäroptikelement (200), das auf einer der Lichtauskoppelfläche (120) des Primäroptikelements (100) zugewandten Seite eine Lichteinkoppelfläche (210) und auf einer dem Primäroptikelement (100) abgewandten Seite eine Lichtauskoppelfläche (220), welche Lichtauskoppelfläche konvex ausgebildet ist, aufweist, und
- einen in Lichtabstrahlrichtung nach der Lichtauskoppelfläche (220) des Sekundäroptikelements (200) angeordneten, zur Erzeugung einer Lichtverteilung oder einer Teil-Lichtverteilung einer Lichtfunktion vorgesehenen Reflektor (400, 410, 420),
wobei das Sekundäroptikelement (200) eingerichtet ist, die von dem ersten Leuchtmittel (50) emittierten Lichtstrahlen, welche die Lichtauskoppelfläche (220) des Sekundäroptikelements (200) erreichen, beim Auskoppeln mittels Brechung auf den Reflektor (400, 410, 420) zu lenken oder ohne Richtungsänderung passieren zu lassen,
**dadurch gekennzeichnet, dass**
in Hauptabstrahlrichtung des ersten Leuchtmittels (50) vor der Lichteinkoppelfläche (110) des Primäroptikelements (100) eine Vorsatzoptik (300) angeordnet ist, die eingerichtet ist, die von dem ersten Leuchtmittel (50) emittierten Lichtstrahlen auf einen Punkt zu fokussieren, wobei
das Sekundäroptikelement (200) als Teil einer Kugel mit einem Kugelmittelpunkt (201) ausgebildet ist, wobei
die reflektierende Mantelfläche des Primäroptikelements (100) einen hyperbolisch geformten Bereich (160) mit einem Brennpunkt (161) und einem virtuellen Brennpunkt (162) aufweist, wobei der hyperbolisch geformte Bereich (160) ein Umlenken der durch die Lichteinkoppelfläche (110) des Primäroptikelements (100) eintretenden Lichtstrahlen in Richtung der Lichtauskoppelfläche (120) des Primäroptikelements (100) ermöglicht, wobei
der Brennpunkt (161) des hyperbolisch geformten Bereichs (160) des Primäroptikelements (100) und der Kugelmittelpunkt (201) in einem Punkt liegen, und wobei
die Vorsatzoptik (300) dazu eingerichtet ist, die Lichtstrahlen des ersten Leuchtmittels (50) auf den virtuellen Brennpunkt (162) des hyperbolisch geformten Bereichs (160) des Primäroptikelements (100) zu fokussieren.

2. Vorrichtung nach Anspruch 1, **dadurch gekennzeichnet, dass** das Primäroptikelement (100) und das Sekundäroptikelement (200) stoffschlüssig miteinander verbunden sind, wobei vorzugsweise das Primäroptikelement (100) und das Sekundäroptikelement (200) einstückig ausgebildet sind und aus demselben Material bestehen.

3. Vorrichtung nach Anspruch 1 oder 2, **dadurch gekennzeichnet, dass** die Vorsatzoptik (300) mit dem Primäroptikelement (100) stoffschlüssig verbunden ist, wobei vorzugsweise die Vorsatzoptik (300) einstückig mit dem Primäroptikelement (100) ausgebildet ist.

4. Vorrichtung nach einem der Ansprüche 1 bis 3, **dadurch gekennzeichnet, dass** das Primäroptikelement (100) und das Sekundäroptikelement (200) aus Tarflon gebildet sind.

5. Vorrichtung nach einem der Ansprüche 1 bis 4 **dadurch gekennzeichnet, dass** das erste Leuchtmittel (50) zumindest eine Lichtquelle aufweist, wobei vorzugsweise die zumindest eine Lichtquelle als LED oder als Laserlichtquelle mit einem Lichtkonversionselement ausgebildet ist.

6. Vorrichtung nach einem der Ansprüche 1 bis 5, **dadurch gekennzeichnet, dass** das erste Leuchtmittel (50) zur Erzeugung einer Lichtverteilung oder einer Teil-Lichtverteilung einer ersten Lichtfunktion, beispielsweise Abblendlicht oder Fernlicht, vorgesehen ist.

7. Vorrichtung nach einem der Ansprüche 1 bis 6, **dadurch gekennzeichnet, dass** der Reflektor als Freiformreflektor (420) ausgebildet ist.

8. Vorrichtung nach einem der Ansprüche 1 bis 7, **dadurch gekennzeichnet, dass** der Reflektor als parabolischer Reflektor (400) mit einem Brennpunkt (401) ausgebildet ist.

9. Vorrichtung nach Anspruch 1, **dadurch gekennzeichnet, dass** der Brennpunkt (401) des parabolischen Reflektors (400) und der Kugelmittelpunkt in einem Punkt liegen.

10. Vorrichtung nach einem der Ansprüche 1 bis 9, **dadurch gekennzeichnet, dass** der Reflektor als hyperbolischer Reflektor (410) mit einem Brennpunkt (411) ausgebildet ist.

11. Vorrichtung nach Anspruch 10, **dadurch gekennzeichnet, dass** der Brennpunkt (411) des hyperbolischen Reflektors (410) und der Kugelmittelpunkt (201) in einem Punkt liegen.

12. Kraftfahrzeugscheinwerfer (10) mit zumindest einer Beleuchtungsvorrichtung nach einem der Ansprüche 1 bis 11.

13. Kraftfahrzeugscheinwerfer nach Anspruch 12, **dadurch gekennzeichnet, dass** der Kraftfahrzeugscheinwerfer (10) ferner ein zweites Leuchtmittel (60) zur Erzeugung einer Lichtverteilung oder einer Teil-Lichtverteilung einer zweiten Lichtfunktion, beispielsweise Abblendlicht oder Fernlicht, vorgesehen ist, wobei vorzugsweise das zweite Leuchtmittel (60) zumindest eine Lichtquelle aufweist, wobei insbesondere die zumindest eine Lichtquelle als LED oder als Laserlichtquelle mit einem Lichtkonversionselement ausgebildet ist.

14. Kraftfahrzeugscheinwerfer nach Anspruch 13, **dadurch gekennzeichnet, dass** das erste und das zweite Leuchtmittel (50, 60) auf einer gemeinsamen Leiterplatte (70) angeordnet sind.

## Claims

1. Illumination device for a motor vehicle headlamp, comprising
- a light-conducting primary optical element (100) arranged in the main radiation direction of a first illuminant (50), which primary optical element (100) has, on a side facing the first illuminant (50), a light coupling-in surface (110) for coupling light beams into the primary optical element (100), on a side facing away from the first illuminating means (50), a light coupling-out surface (120) and a shell surface extending between the light coupling-in surface (110) and the light coupling-out surface (120), on which shell surface the coupled-in light is redirectable by total reflection in the direction of the light coupling-out surface (120) of the primary optical element (100),
- a secondary optical element (200) arranged downstream of the light output coupling surface (120) of the primary optical element (100) in the light emission direction, which secondary optical element has a light input coupling surface (210) on a side facing the light output coupling surface (120) of the primary optical element (100) and a light output coupling surface (220) on a side facing away from the primary optical element (100), which light output coupling surface is of convex design, and
- a reflector (400, 410, 420) arranged downstream of the light outcoupling surface (220) of the secondary optical element (200) in the light emission direction and provided for generating a light distribution or a partial light distribution of a light function,
wherein the secondary optical element (200) is arranged to direct the light rays emitted by the first illuminant (50), which reach the light decoupling surface (220) of the secondary optical element (200), onto the reflector (400, 410, 420) during decoupling by means of refraction or to allow them to pass without a change in direction,
**characterized in that**
in the main radiation direction of the first illuminant (50) in front of the light coupling surface (110) of the primary optical element (100) an attachment optics (300) is arranged, which is configured to focus the light beams emitted by the first illuminant (50) onto a point, wherein the secondary optical element (200) is formed as part of a sphere with a spherical center (201), wherein
the reflective shell surface of the primary optical element (100) comprises a hyperbolically shaped region (160) having a focal point (161) and a virtual focal point (162), the hyperbolically shaped region (160) allowing light rays entering through the light input surface (110) of the primary optics element (100) to be redirected toward the light output surface (120) of the primary optics element (100), wherein
the focal point (161) of the hyperbolically shaped region (160) of the primary optical element (100) and the sphere center (201) lie in one point, and wherein
the attachment optics (300) is adapted to focus the light rays of the first illuminant (50) onto the virtual focal point (162) of the hyperbolically shaped region (160) of the primary optic element (100).

2. Illumination device according to claim 1, **characterized in that** the primary optics element (100) and the secondary optics element (200) are materially connected to each other, preferably the primary optics element (100) and the secondary optics element (200) being formed in one piece and consisting of the same material.

3. Illumination device according to claim 1 or 2, **characterized in that** the attachment optics (300) are materially connected to the primary optics element (100), preferably the attachment optics (300) being formed integrally with the primary optics element (100).

4. Illumination device according to any one of claims 1 to 3, **characterized in that** the primary optics element (100) and the secondary optics element (200) are formed from Tarflon.

5. Illumination device according to any one of claims 1 to 4, **characterized in that** the first illuminating means (50) comprises at least one light source, preferably the at least one light source being formed as an LED or as a laser light source with a light conversion element.

6. Illumination device according to any one of claims 1 to 5, **characterized in that** the first illuminating means (50) is provided for generating a light distribution or a partial light distribution of a first light function, for example low beam or high beam.

7. Illumination device according to one of claims 1 to 6, **characterized in that** the reflector is designed as a free-form reflector (420).

8. Illumination device according to any one of claims 1 to 7, **characterized in that** the reflector is formed as a parabolic reflector (400) with a focal point (401).

9. Illumination device according to claim 1, **characterized in that** the focal point (401) of the parabolic reflector (400) and the center of the sphere are located in one point.

10. Illumination device according to any one of claims 1 to 9, **characterized in that** the reflector is formed as a hyperbolic reflector (410) with a focal point (411).

11. Illumination device according to claim 10, **characterized in that** the focal point (411) of the hyperbolic reflector (410) and the spherical center (201) lie in one point.

12. Motor vehicle headlamp (10) comprising at least one illumination device according to any one of claims 1 to 11.

13. Motor vehicle headlamp according to claim 12, **characterized in that** the motor vehicle headlamp (10) further comprises a second illuminant (60) for generating a light distribution or a partial light distribution of a second light function, for example low beam or high beam, wherein preferably the second illuminant (60) having at least one light source, the at least one light source being designed in particular as an LED or as a laser light source having a light conversion element.

14. Motor vehicle headlamp according to claim 13, **characterized in that** the first and the second illuminant (50, 60) are arranged on a common printed circuit board (70).

## Revendications

1. Dispositif d'éclairage pour un phare de véhicule automobile, comprenant
- un élément optique primaire conducteur de lumière (100) qui est disposé dans la direction de rayonnement principale d'un premier moyen d'éclairage (50) et qui, sur un côté faisant face au premier moyen d'éclairage (50), présente une surface d'entrée de couplage de lumière (110) pour coupler des faisceaux lumineux dans l'élément optique primaire (100), sur un côté opposé au premier moyen d'éclairage (50), une surface de sortie de lumière (120) et une surface latérale s'étendant entre la surface d'entrée de lumière (110) et la surface de sortie de lumière (120), sur laquelle la lumière entrée est réfléchie par réflexion totale dans la direction de la surface de sortie de lumière (120) de l'élément optique primaire (100).
- un élément optique secondaire (200) disposé en aval de la surface de couplage de sortie de lumière (120) de l'élément optique primaire (100) dans la direction d'émission de lumière, lequel élément optique secondaire (200) a une surface de couplage d'entrée de lumière (210) sur un côté faisant face à la surface de couplage de sortie de lumière (120) de l'élément optique primaire (100) et une surface de couplage de sortie de lumière (220) sur un côté opposé à l'élément optique primaire (100), laquelle surface de couplage de sortie de lumière est de conception convexe, et
- un réflecteur (400, 410, 420) disposé en aval de la surface de sortie de lumière (220) de l'élément optique secondaire (200) dans la direction d'émission de lumière et prévu pour générer une distribution de lumière ou une distribution partielle de lumière d'une fonction de lumière,
l'élément optique secondaire (200) étant configuré pour diriger les rayons lumineux émis par le premier illuminant (50), qui atteignent la surface de découplage de la lumière (220) de l'élément optique secondaire (200), sur le réflecteur (400, 410, 420) lors du découplage au moyen d'une réfraction ou pour les laisser passer sans changement de direction,
**caractérisé en ce que**
dans la direction principale de rayonnement du premier illuminant (50) devant la surface de couplage de la lumière (110) de l'élément optique primaire (100), qui est configuré pour focaliser les faisceaux lumineux émis par le premier illuminant (50) sur un point, dans lequel l'élément optique secondaire (200) est formé en tant que partie d'une sph sphère avec un centre sphérique (201) où
la surface d'enveloppe réfléchissante de l'élément optique primaire (100) comprend une région de forme hyperbolique (160) ayant un point focal (161) et un point focal virtuel (162), la région de forme hyperbolique (160) permettant à des rayons lumineux entrant à travers la surface d'entrée de lumière (110) de l'élément optique primaire (100) d'être redirigés vers la surface de sortie de lumière (120) de l'élément optique primaire (100), où
le point focal (161) de la région de forme hyperbolique (160) de l'élément optique primaire (100) et le centre sphérique (201) se trouvent en un seul point, et dans lequel
l'optique de fixation (300) est agencée pour focaliser les rayons lumineux du premier illuminant (50) sur le point focal virtuel (162) de la région de forme hyperbolique (160) de l'élément optique primaire (100).

2. Dispositif selon la revendication 1, **caractérisé en ce que** l'élément optique primaire (100) et l'élément optique secondaire (200) sont reliés l'un à l'autre par un verrouillage de matériau, l'élément optique primaire (100) et l'élément optique secondaire (200) étant de préférence formés en une seule pièce et constitués du même matériau.

3. Dispositif selon la revendication 1 ou 2, **caractérisé en ce que** l'optique de fixation (300) est reliée matériellement à l'élément optique primaire (100), de préférence l'optique de fixation (300) étant formée intégralement avec l'élément optique primaire (100).

4. Dispositif selon l'une quelconque des revendications 1 à 3, **caractérisé en ce que** l'élément optique primaire (100) et l'élément optique secondaire (200) sont formés de Tarflon.

5. Dispositif selon l'une quelconque des revendications 1 à 4, **caractérisé en ce que** le premier moyen d'éclairage (50) comprend au moins une source de lumière, de préférence l'au moins une source de lumière étant formée comme une LED ou comme une source de lumière laser avec un élément de conversion de lumière.

6. Dispositif selon l'une quelconque des revendications 1 à 5, **caractérisé en ce que** le premier moyen d'éclairage (50) est prévu pour générer une répartition lumineuse ou une répartition lumineuse partielle d'une première fonction lumineuse, par exemple faisceau de croisement ou faisceau de route.

7. Dispositif selon l'une des revendications 1 à 6, **caractérisé en ce que** le est conçu comme un réflecteur à forme libre (420).

8. Dispositif selon l'une des revendications 1 à 7, **caractérisé en ce que** le réflecteur est conçu comme un réflecteur parabolique (400) avec un point focal (401).

9. Dispositif selon la revendication 1, **caractérisé en ce que** le point focal (401) du réflecteur parabolique (400) et le centre de la sphère se trouvent en un seul point.

10. Dispositif selon l'une quelconque des revendications 1 à 9, **caractérisé en ce que** le réflecteur est formé comme un réflecteur hyperbolique (410) avec un point focal (411).

11. Dispositif selon la revendication 10, **caractérisé en ce que** le point focal (411) du réflecteur hyperbolique (410) et le centre sphérique (201) sont situés en un seul point.

12. Projecteur (10) de véhicule automobile comprenant au moins un dispositif d'éclairage selon l'une quelconque des revendications 1 à 11.

13. Projecteur de véhicule à moteur selon la revendication 12, **caractérisé en ce que** le projecteur de véhicule à moteur (10) comprend en outre un deuxième moyen d'éclairage (60) pour générer une distribution de lumière ou une distribution partielle de lumière d'une deuxième fonction d'éclairage, par exemple un feu de croisement ou un feu de route, dans lequel de préférence le deuxième moyen d'éclairage (60) comportant au moins une source de lumière, la au moins une source de lumière étant conçue en particulier comme une LED ou comme une source de lumière laser avec un élément de conversion de lumière.

14. Projecteur de véhicule à moteur selon la revendication 13, **caractérisé en ce que** le premier et le second moyen d'éclairage (50, 60) sont disposés sur une carte de circuit imprimé commune (70).
